# EUROPÄISCHE PATENTSCHRIFT

(11) **EP 2 996 924 B1**
(45) Veröffentlichungstag und Bekanntmachung des Hinweises auf die Patenterteilung: **30.05.2018**
(21) Anmeldenummer: 14712605.6
(22) Anmeldetag: 24.03.2014
(51) Int. Cl.: B62D 1/19

(54) **ENERGIEABSORPTIONSVORRICHTUNG FÜR EINE LENKSÄULE**
ENERGY ABSORPTION DEVICE FOR A STEERING COLUMN
DISPOSITIF D'ABSORPTION D'ÉNERGIE POUR COLONNE DE DIRECTION

(30) Priorität: 14.05.2013 DE 102013104958
(43) Veröffentlichungstag der Anmeldung: 23.03.2016
(73) Patentinhaber: ThyssenKrupp Presta Aktiengesellschaft, 9492 Eschen (LI)
(72) Erfinder: KLEPP, Arne, 6800 Feldkirch (AT); SULSER, Hansjörg, 9487 Gamprin (LI); SEGATTO, Felipe, 7000 Chur (CH); FORTE, Sebastian, 9493 Mauren (LI)
(74) Vertreter: thyssenkrupp Intellectual Property GmbH
(86) Internationale Anmeldenummer: PCT/EP2014/000794
(87) Internationale Veröffentlichungsnummer: WO 2014/183819

(56) Entgegenhaltungen:
- WO-A1-2011/072311
- DE-B3-102008 034 807
- DE-B3-102012 100 626

## Beschreibung

Die vorliegende Erfindung betrifft eine Energieabsorptionsvorrichtung für eine Lenksäule für ein Kraftfahrzeug, wobei die Energieabsorptionsvorrichtung zumindest eine Biegelasche zur Energieabsorption im Crashfall aufweist und die Biegelasche ein erstes Befestigungselement zur Befestigung der Biegelasche an einem ersten Bauteil der Lenksäule und zumindest ein zweites Befestigungselement zur Befestigung der Biegelasche an einem zweiten Bauteil der Lenksäule aufweist und das erste Befestigungselement für den Crashfall unter Verformung der Biegelasche entlang einer, von einem Anfang und einem Ende begrenzten Führungsbahn relativ zum zweiten Befestigungselement verschiebbar gelagert ist. Weiters betrifft die Erfindung auch eine Lenksäule für ein Kraftfahrzeug und ein Verfahren zur Energieabsorption in einer Lenksäule für ein Kraftfahrzeug im Crashfall.

Energieabsorptionsvorrichtungen werden bei Lenksäulen für Kraftfahrzeuge dazu eingesetzt, im Crashfall, also im Falle einer Kollision des Kraftfahrzeugs mit einem anderen Kraftfahrzeug oder einem anderen Gegenstand, die durch das Aufschlagen des Fahrzeuglenkers auf das Lenkrad und damit die Lenksäule verbundene Energie gezielt so abzubauen, dass der auf das Lenkrad geschleuderte Fahrzeuglenker möglichst gar nicht oder zumindest möglichst wenig verletzt wird. Energieabsorptionsvorrichtungen der eingangs genannten Art sind beim Stand der Technik in zahlreichen Ausgestaltungsformen bekannt. Gemeinsam ist ihnen, dass zum gezielten, für den Kraftfahrzeuglenker verträglichen Abbau der im Crashfall auftretenden Stoßenergie zumindest eine Biegelasche der Energieabsorptionsvorrichtung verformt wird, wenn das erste Befestigungselement entlang der Führungsbahn relativ zum zweiten Befestigungselement verschoben wird.

Eine gattungsgemäße Energieabsorptionsvorrichtung ist z.B. aus der WO 2011/072311 A1 bekannt. Dort ist vorgesehen, dass die Biegelasche zur Vermeidung einer Kraftspitze am Beginn des Energieabsorptionsvorgangs vorgespannt ist.

Eine ähnliche Energieabsorptionsvorrichtung für eine Lenksäule mit einer Biegelasche ist auch in der DE 10 2008 034 807 gezeigt.

Die Praxis zeigt, dass mit der bisher bekannten Technologie aber nicht nur am Beginn des Energieabsorptionsvorgangs, wie in der WO 2011/072311 A1 diskutiert, sondern auch während des Energieabsorptionsvorgangs oder an dessen Ende noch Probleme mit übermäßigen Kraftspitzen auftreten können. Dieses Problem tritt vor allem dann auf, wenn relativ schwere Kraftfahrzeuglenker im Crashfall gegen das Lenkrad des Kraftfahrzeuges geschleudert werden. Insbesondere hierbei kann es vorkommen, dass die erste Biegelasche am Ende der Führungsbahn anschlägt, ohne dass bis dahin die im Crashfall auftretende Stoßenergie ausreichend abgebaut ist. Beim Anschlagen des ersten Befestigungselementes am Ende der Führungsbahn kann es zu unerwünscht hohen Kraftspitzen kommen.

Aus der gattungsgemäß zugrunde gelegten DE 10 2008 034 807 B3 ist eine Energieabsorptionsvorrichtung für eine Lenksäule gemäß dem Oberbegriff des Anspruchs 1 bekannt, bei der die Energieabsorption dadurch erfolgt, dass eine Biegelasche im Crashfall zwischen einem ersten Befestigungselement und einem relativ dazu entlang einer Führungsbahn verschiebbar gelagerten zweiten Befestigungselement verformt wird. Für unterschiedliche Fahrzeugtypen und Ausführungsformen einer Lenksäule muss die Energieabsorptionscharakteristik der Energieabsorptionsvorrichtung an die jeweiligen Besonderheiten der Konstruktion angepasst werden. Dies erfordert eine Anpassung der Kennlinie der Energieabsorption des Energieabsorptionselements. Zur Veränderung der Kennlinie ist eine geometrische Ausgestaltung des Biegestreifens erforderlich. Nachteilig daran ist, dass für unterschiedliche Fahrzeugtypen jeweils angepasste Biegestreifen konstruiert und zur Verfügung gestellt werden müssen, wodurch ein hoher Produktions- und Lageraufwand entsteht.

Aufgabe der Erfindung ist es daher, eine Energieabsorptionsvorrichtung der eingangs genannten Art dahingehend zu verbessern, dass der Energieabsorptionsvorgang über die Auslegung der Biegelasche hinaus beeinflusst werden kann. Dies wird gemäß der Erfindung durch eine Energieabsorptionsvorrichtung gemäß Patentanspruch 1 erreicht.

Es ist somit vorgesehen, dass die Energieabsorptionsvorrichtung zusätzlich zum Ende der Führungsbahn zumindest ein als separates Bautei ausgebildetes Kollisionselement aufweist, welches an der Führungsbahn angeordnet ist, wobei im Crashfall
a) mittels Zusammenwirken des ersten Befestigungselements mit dem Kollisionselement durch Umformung des Kollisionselementes und/oder des ersten Befestigungselementes zusätzlich Energie absorbierbar ist;
   oder
b) mittels Zusammenwirken eines damit entlang der Führungsbahn mitbewegten Elementes mit dem Kollisionselement durch Umformung des Kollisionselementes und/oder des mitbewegten Elementes zusätzlich Energie absorbierbar ist;
   oder
c) mittels Zusammenwirken des ersten Befestigungselements und eines damit entlang der Führungsbahn mitbewegten Elementes mit dem Kollisionselement durch Umformung des Kollisionselementes und/oder des ersten Befestigungselementes und/oder des mitbewegten Elementes zusätzlich Energie absorbierbar ist.

Eine Grundidee der Erfindung besteht somit darin, zusätzlich zur Biegelasche einen zweiten Energieabsorptionsvorgang vorzusehen, welcher zumindest ein separates Kollisionselement aufweist, welches im Crashfall so mit dem ersten Befestigungselement und/oder einem damit entlang der Führungsbahn mitbewegten Element unter Umformung eines der genannten Elemente zusammenwirkt, dass zusätzlich Energie abgebaut bzw. absorbiert wird. Dieses Kollisionselement ist zusätzlich zum Ende der Führungsbahn vorhanden, sodass es im Crashfall bevorzugt zum genannten Zusammenwirken und damit zum zusätzlichen Abbau der Stoßenergie kommt, bevor durch Erreichen des Endes der Führungsbahn eine unerwünschte Kraftspitze auftritt. In diesem Sinne ist es günstig, wenn das Kollisionselement zwischen dem Anfang und dem Ende der Führungsbahn angeordnet ist. Bevorzugte Ausgestaltungsformen sehen dabei vor, dass das Kollisionselement im Bereich der dem Ende zugewandten Hälfte der Führungsbahn also sozusagen in der zweiten Hälfte der Führungsbahn angeordnet ist. Bei diesen Ausgestaltungsformen kann im Crashfall dann zur Energieabsorption zunächst einmal die Biegelasche alleine wirken. Sollte dies dann zum Abbau der Stoßenergie nicht ausreichen, so sorgt der zweite Energieabsorptionsmechanismus mit dem Kollisionselement für einen gezielten, für den Fahrzeuglenker verträglichen Abbau der restlichen, sich noch im System befindlichen Stoßenergie. Hierdurch wird günstigerweise ein Anschlagen des ersten Befestigungselementes und/oder des mitbewegten Elementes am Ende der Führungsbahn vermieden. In diesem Zusammenhang wird aber darauf hingewiesen, dass erfindungsgemäße zusätzliche Energieabsorptionsmechanismen mit Kollisionselement aber nicht nur am Ende sondern überall entlang der Führungsbahn zur gezielten Beeinflussung des Abbaus der Stoßenergie eingesetzt werden können.

Grundsätzlich ist es möglich, dass ein oder aber auch mehrere Kollisionselemente entlang der Führungsbahn positioniert sind. Diese können sogar punktuell begrenzt sein und nur an einer bestimmten Stelle entlang der Führungsbahn wirken. Die Kollisionselemente können umgeformt werden, aber auch, quasi als Spezialfall der Umformung, als Wegbrechelemente ausgeführt sein. Auch ein Wegbrechen kann in einer Ausführungsform somit als Umformung angesehen werden.

Im Sinne eines sanften Energieabbaus sehen bevorzugte Ausgestaltungsformen der Erfindung vor, dass die Kollisionselemente nicht nur punktuell sondern entlang einer Teilstrecke der Führungsbahn, also über einen längeren Abschnitt des gesamten Energieabsorptionsvorgangs wirken. In diesem Sinn ist es günstig, wenn das Kollisionselement sich entlang zumindest einer Teilstrecke der Führungsbahn erstreckt und im Crashfall mittels des Zusammenwirkens des ersten Befestigungselements und/oder des damit entlang der Führungsbahn mitbewegten Elementes mit dem Kollisionselement durch Umformung des Kollisionselementes und/oder des ersten Befestigungselementes und/oder des mitbewegten Elementes entlang der Teilstrecke zusätzlich Energie absorbierbar ist.

Durch die Ausgestaltung der Länge und der Form des Kollisionselementes, des ersten Befestigungselementes und/oder des oder der damit mitbewegten Elemente kann gezielt beeinflusst werden, welchen Verlauf der Energieabsorptionsvorgang nimmt. Es kann durch entsprechende Ausgestaltungsformen der genannten Elemente also gezielt beeinflusst werden, wieviel Energie an welcher Stelle bzw. zu welchem Zeitpunkt innerhalb des gesamten Energieabsorptionsvorgangs abgebaut wird. Es können somit mit anderen Worten gezielt Energieabbauprofile erzeugt werden. In diesem Sinne ist es günstig, wenn die Stärke der Energieabsorption entlang der Teilstrecke variiert. Besonders bevorzugt ist dabei vorgesehen, dass die Stärke der Energieabsorption in Richtung hin zum Ende der Führungsbahnen entlang der Teilstrecke zunimmt. Es kann z.B. vorgesehen sein, dass das Kollisionselement zumindest einen keilförmigen Bereich aufweist oder als solcher ausgebildet ist. Bevorzugte Ausgestaltungsformen sehen dabei vor, dass das Kollisionselement mit seinem keilförmigen Bereich die vom ersten Befestigungselement und/oder dem mitbewegten Element zu passierende Öffnungsweite des Langlochs reduziert. Generell ist es günstig, wenn die Führungsbahn ein Langloch ist. Hierbei sehen bevorzugte Ausgestaltungsformen der Erfindung vor, dass das erste Befestigungselement und/oder das mitbewegte Elemente das Langloch durchdringt bzw. durchdringen und im Crashfall entlang des Langlochs verschiebbar ist bzw. sind. Um die vom ersten Befestigungselement und/oder dem mitbewegten Element zu passierende Öffnungsweite des Langlochs wirksam zu reduzieren, muss das Kollisionselement nicht zwingend in der Ebene der Führungsbahn bzw. des Langlochs liegen. Dies gilt vor allem dann, wenn das erste Befestigungselement und/oder das oder die mitbewegten Elemente aus dem Langloch bzw. über eine sonstige Führungsbahn hervorstehen.

Das Kollisionselement kann, wie bereits erläutert, unterschiedlich ausgeformt sein, um gezielte Verläufe der Stärke der Energieabsorption bereitzustellen. Darüber hinaus kann es auch an unterschiedlichen Stellen und über unterschiedlich lange Teilstrecken der Führungsbahn realisiert sein. Hierdurch kann der Ort und der Zeitpunkt der Unterstützung des ersten Energieabsorptionsvorgangs in Form der Umformung der Biegelasche mittels des zweiten Energieabsorptionsvorgangs mit dem Kollisionselement gezielt eingestellt werden. Darüber hinaus gibt es aber auch verschiedene Arten wie das Kollisionselement in der Energieabsorptionsvorrichtung ausgebildet und befestigt ist. Gemäß der Erfindung ist das Kollisionselement als separates Bauteil ausgeführt, welches, vorzugsweise auswechselbar, an und/oder in der restlichen Energieabsorptionsvorrichtung z.B. an einer Schiene derselben befestigt ist. Durch eine lösbare Befestigung ist auch ein Auswechseln des Kollisionselements möglich, z.B. um die Stärke der Energieabsorptionswirkung durch den Austausch von Kollisionselementen gezielt zu verändern bzw. anzupassen. In anderen Varianten kann vorgesehen sein, dass das Kollisionselement an der Biegelasche selbst angeformt ist. Bei diesen Varianten kann das Kollisionselement z.B. eine Verlängerung oder ein Fortsatz der Biegelasche bilden. Wiederum andere Varianten sehen vor, dass die Führungsbahn in einer Schiene der Energieabsorptionsvorrichtung z.B. als Langloch ausgebildet ist. Das Kollisionselement kann dann Teil dieser Schiene sein, oder an dieser angeformt sein. Im Falle, dass die Schiene als Führungsbahn ein Langloch aufweist, kann das Kollisionselement auch direkt in Form einer entsprechenden Ausformung der das Langloch begrenzenden Wandungen der Schiene ausgebildet sein.

Der Vollständigkeit halber wird auch noch darauf hingewiesen, dass der Begriff der Biegelasche weit auszulegen ist. Es kann sich um eine reine Biegelasche handeln, welche ausschließlich umgeformt wird. Es kann sich aber genauso gut auch um eine Reißbiegelasche handeln, bei der zusätzlich zum Umbiegen auch ein Aufreißen vorgesehen ist.

Um im Crashfall zu Beginn der Energieabsorption bzw. zu Beginn der Umformung der Biegelasche eine vorgegebene bzw. definierte Lösekraft bereitzustellen und/oder auch um die Biegelasche in einer definierten bzw. vorgegebenen Ausgangsstellung für den Crashfall bereit zu halten, kann vorgesehen sein, dass das erste Befestigungselement und/oder das damit entlang der Führungsbahn mitbewegte Element in einer Ausgangsstellung an der Führungsbahn eingepasst, vorzugsweise eingeklemmt, ist. Diese Ausgangsstellung befindet sich günstigerweise entweder am Anfang oder in der Nähe des Anfangs der Führungsbahn. Günstigerweise ist diese Ausgangsstellung entlang der Führungsbahn vom Kollisionselement distanziert angeordnet. Im Falle der Ausbildung der Führungsbahn als Langloch kann vorgesehen sein, dass das Befestigungselement oder das damit entlang der Führungsbahn mitbewegte Element in der Ausgangsstellung zwischen den das Langloch begrenzenden Wänden eingepasst, vorzugweise eingeklemmt, ist. An diesen das Langloch begrenzenden Wänden können vorstehende Bereiche vorgesehen sein, welche dem Einpassen bzw. dem Einklemmen des ersten Befestigungselementes bzw. des damit entlang der Führungsbahn mitbewegten Elementes in der Ausgangsstellung dienen. Klar ist, dass dieses Einpassen bzw. Einklemmen eine sich im Crashfall lösende Verbindung ist. Bei der Montage der Biegelasche kann vorgesehen sein, dass das erste Befestigungselement oder ein damit entlang der Führungsbahn mitbewegtes Element zunächst entlang der Führungsbahn so weit verschoben wird, bis das erste Befestigungselement bzw. das entlang der Führungsbahn damit mitbewegte Element in der Ausgangsstellung eingepasst bzw. eingeklemmt wird. Günstigerweise findet dabei eine Kalibrierung, also eine gewisse Umformung der Wände des Langlochs, insbesondere der vorstehenden Bereiche der Wände des Langlochs und/oder des ersten Befestigungselementes und/oder des entlang der Führungsbahn mitbewegten Elementes statt. Auf diese Art und Weise kann auch eine Vorspannung auf die Biegelasche aufgebracht werden, welche gezielt dazu eingesetzt werden kann, die Lösekraft im Crashfall in gewünschten Bereichen einzustellen. Diese Ausgangsstellung kann, wie weiter unten noch erläutert, auch mittels eines Scherbolzens, welcher im Crashfall abgeschert wird, für den Normalbetrieb festgestellt werden.

Zusätzlich zur Energieabsorptionsvorrichtung an sich betrifft die Erfindung auch eine Lenksäule für ein Kraftfahrzeug mit einer in einer Lenkspindellagereinheit der Lenksäule um ihre Lenkspindellängsachse drehbar gelagerten Lenkspindel und einer Trageinheit zur Befestigung der Lenkspindellagereinheit im Kraftfahrzeug. Eine erfindungsgemäße Lenksäule ist dabei dadurch gekennzeichnet, dass die Lenksäule zumindest eine erfindungsgemäße Energieabsorptionsvorrichtung aufweist und die Biegelasche mit einem der Befestigungselemente direkt oder indirekt an der Lenkspindellagereinheit als dem einen der Bauteile der Lenksäule und mit dem anderen der Befestigungselemente an der Trageinheit als dem anderen der Bauteile der Lenksäule befestigt ist. Die Lenkspindellagereinheit ist dabei das die Lenkspindel lagernde Bauteil der Lenksäule, welches im Crashfall zusammen mit der Lenkspindel relativ zu dem die Lenkspindellagereinheit lagernden Bauteil der Lenksäule in Form der Trageinheit verschoben wird. Bei dieser Relativverschiebung von Lenkspindellagereinheit und Trageinheit kommt es dann durch Umformung der Biegelasche zu einer ersten Form der Energieabsorption und durch das Zusammenwirken des ersten Befestigungselementes und/oder des damit entlang der Führungsbahn mitbewegten Elementes mit dem Kollisionselement zu einer zusätzlichen Energieabsorption, wenn entsprechend viel Stoßenergie in das System eingetragen wird und die Biegelasche entsprechend weit umgeformt wird.

Ein erfindungsgemäßes Verfahren zur Energieabsorption in einer Lenksäule für ein Kraftfahrzeug im Crashfall sieht vor, dass in einer erfindungsgemäßen Energieabsorptionsvorrichtung das erste Befestigungselement unter Verformung der Biegelasche entlang der Führungsbahn relativ zum zweiten Befestigungselement verschoben wird und mittels Zusammenwirken des ersten Befestigungselementes und/oder des damit entlang der Führungsbahn mitbewegten Elementes mit dem Kollisionselement durch Umformung des Kollisionselementes und/oder des ersten Befestigungselementes und/oder des mitbewegten Elementes zusätzlich Energie absorbiert wird. Wie bereits erläutert, ist dabei günstigerweise vorgesehen, dass zunächst die Biegelasche verformt wird und dann erst ein Zusammenwirken zwischen erstem Befestigungselement bzw. damit mitbewegtem Element und Kollisionselement stattfindet.

Dies ist aber nicht zwingend so vorgesehen. Der Begriff der Umformung umfasst, wie gesagt, auch ein Wegbrechen oder Abreißen entsprechender Elemente. Ansonsten gelten für die Lenksäule und das Verfahren die Ausführungen zur Energieabsorptionsvorrichtung, soweit diese anwendbar sind.

Weitere Merkmale und Einzelheiten bevorzugter Ausgestaltungsformen der Erfindung werden anhand der nachfolgenden Figurenbeschreibung erläutert. Es zeigen:
Fig. 1 eine Seitenansicht auf eine erfindungsgemäße Lenksäule mit einer ersten Art einer erfindungsgemäßen Energieabsorptionsvorrichtung;
Fig. 2 den Schnitt aus Fig. 1 entlang der Schnittlinie AA;
Fig. 3 eine Schrägansicht der Lenksäule aus Fig. 1;
Fig. 4 eine Schrägansicht der Lenkspindellagereinheit der Lenksäule aus Fig. 1 mit der erfindungsgemäßen Energieabsorptionsvorrichtung;
Fig. 5 die Energieabsorptionsvorrichtung aus Fig. 4 in einer Explosionsdarstellung;
Fig. 6 und 7 das Rückhalteteil und die Schiene dieses ersten Ausführungsbeispiels der Energieabsorptionsvorrichtung;
Fig. 8 eine zweite erfindungsgemäß ausgebildete Energieabsorptionsvorrichtung und
Fig. 9 bis 12 eine dritte erfindungsgemäß ausgebildete Energieabsorptionsvorrichtung in verschiedenen Stellungen.

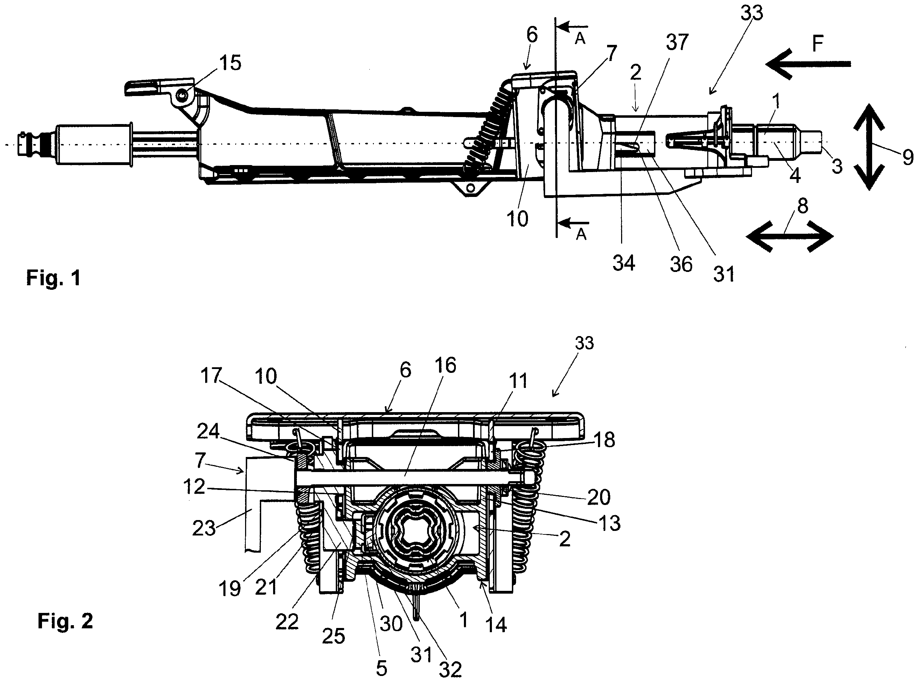

Die in den Fig. 1 bis 3 dargestellte Lenksäule 33 umfasst eine Lenkspindellagereinheit 2, welche eine Lenkspindel 1 drehbar um die Lenkspindellängsache 4 der Lenkspindel 1 lagert, die ein lenkradseitiges Ende 3 aufweist, welches zum Anschluss eines in den Figuren nicht dargestellten Lenkrades dient. Die Lenkspindellagereinheit 2 ist über eine weiter unten genauer beschriebene Losbrechverbindung und eine erfindungsgemäße Energieabsorptionsvorrichtung 30 mit einem Rückhalteteil 5 verbunden. Bis zu einem Grenzwert einer zwischen der Lenkspindellagereinheit 2 und dem Rückhalteteil 5 parallel zur Lenkspindellängsachse 4 wirkenden Kraft ist das Rückhalteteil 5 mit der Lenkspindellagereinheit 2 bezogen auf die Richtung der Lenkspindellängsachse 4 unverschiebbar verbunden. Der Grenzwert kann hierbei für die beiden Richtungen parallel zur Lenkspindellängsachse 4 gleich oder unterschiedlich sein und bei der Konstruktion des Systems eingestellt werden.

Eine im Crashfall durch die Kollision des Fahrzeuglenkers mit dem Lenkrad auf die Lenkspindellagereinheit 2 ausgeübte Kraft F (bzw. die entsprechende Kraftkomponente parallel zur Lenkspindellängsachse 4) weist zur Fahrzeugfront hin, wie dies in Fig. 1 veranschaulicht ist, und wird entsprechend durch eine Gegenkraft an der Trageinheit 6 aufgenommen.

Eine die Lenkspindellagereinheit 2 tragende Trageinheit 6 ist im Betriebszustand der Lenksäule 33 starr mit dem Chassis des Kraftfahrzeuges verbunden. Im geöffneten Zustand einer Feststelleinrichtung 7 kann die Lenksäule 33 in der Länge und in der Höhe bzw. Neigung verstellt werden. Hierbei ist die Lenkspindellagereinheit 2 gegenüber der Trageinheit 6 parallel zur Lenkspindellängsachse 4 (=Längenverstellrichtung 8) und in eine rechtwinklig hierzu stehende Höhe- bzw. Neigungsverstellrichtung 9 gegenüber der Trageinheit 6 verstellbar. Im geschlossenen Zustand der Feststelleinrichtung 7 wird eine Feststellkraft zur Feststellung der Lenkspindellagereinheit 2 bezüglich einer parallel zur Lenkspindellängsachse 4 erfolgenden Verschiebung gegenüber der Trageinheit 6 aufgebracht, wobei die Feststellkraft zumindest bezüglich einer Verschiebung parallel zur Lenkspindellängsachse 4 in Richtung zur Fahrzeugfront höher als der Grenzwert der Kraft ist, bis zu der die Lenkspindellagereinheit 2 gegenüber dem Rückhalteteil 5 unverschiebbar gehalten ist. Weiters wird von der Feststelleinrichtung 7 eine Feststellkraft zur Feststellung der Lenkspindellagereinheit 2 gegen eine Verstellung gegenüber der Trageinheit 6 in die Höhen- bzw. Neigungsverstellrichtung 9 aufgebracht.

Im gezeigten Ausführungsbeispiel ist die Lenkspindellagereinheit 2 zwischen Seitenwangen 10, 11 der Trageinheit 6 angeordnet. Zwischen den Seitenwangen 10, 11 der Trageinheit 6 und der Lenkspindellagereinheit 2 liegen weiters Seitenschenkel 12, 13 einer Zwischeneinheit 14, die die Lenkspindellagereinheit 2 zumindest über einen Großteil ihres Umfangs umgibt. Die Zwischeneinheit 14 ist im geöffneten Zustand der Feststelleinrichtung 7 gegenüber der Trageinheit 6 in die Höhen- bzw. Neigungsverstellrichtung 9 verstellbar. Hierzu ist sie um eine Schwenkachse 15 gegenüber der Trageinheit 6 verschwenkbar. Die Zwischeneinheit 14 ist mit der Trageinheit 6, bezogen auf die Richtung der Lenkspindellängsachse 4 unverschiebbar verbunden, beispielsweise (auch) über die Ausbildung dieser Schwenkachse 15. Die Lenkspindellagereinheit 2 ist im geöffneten Zustand der Feststelleinrichtung 7 gegenüber der die Lenkspindellagereinheit 2 verschiebbar führenden Zwischeneinheit 14 parallel zur Lenkspindellängsachse 4 verschiebbar und im geschlossenen Zustand der Feststelleinrichtung 7 durch die von der Feststelleinrichtung 7 aufgebrachte Feststellkraft in Richtung der Lenkspindellängsachse 4 unverschiebbar gegenüber der Zwischeneinheit 14 gehalten.

Die Feststelleinrichtung 7 umfasst einen rechtwinklig zur Lenkspindellängsachse 4 sich erstreckenden Spannbolzen 16, der Öffnungen 17, 18 (vergleiche Fig. 2) in den Seitenwangen 10, 11 durchsetzt, die als in Richtung der Höhen- bzw. Neigungsverstellung 9 verlaufende Langlöcher ausgebildet sind und in denen sich der Spannbolzen 16 bei der Höhe- bzw. Neigungsverstellung der Lenksäule 33 verschiebt. Von den Rändern dieser Öffnungen 17, 18 wird der Spannbolzen 16, bezogen auf die Richtung der Lenkspindellängsachse 4 gegenüber der Trageinheit 6 unverschiebbar gehalten. Der Spannbolzen 16 durchsetzt weiters Öffnungen in den Seitenschenkeln 12, 13 der Zwischeneinheit 11, deren Durchmesser abgesehen von einem Gleitspiel dem des Spannbolzens 16 entsprechen.

Auf dem Spannbolzen 16 sind beidseitig der Seitenwangen 10, 11 der Trageinheit 6 Feststellteile 19, 20 angeordnet, die vom Spannbolzen 16 durch Öffnungen durchsetzt werden und in Richtung der Achse des Spannbolzen 16 axial verschiebbar sind. Das eine Feststellteil 19 besitzt einen Abschnitt, in welchem es vom Spannbolzen 16 durchsetzt wird und einen über einen Verbindungsabschnitt 21 mit diesem verbundenen Abschnitt 22, in welchem es, wie weiter unten beschrieben, mit dem Rückhalteteil 5 zusammenwirkt. Das Feststellteil 20 und das Feststellteil 19 im Bereich seines vom Spannbolzen 16 durchsetzten Abschnittes werden im geschlossenen Zustand der Feststelleinrichtung an die Seitenwangen 10, 11 der Trageinheit 6 angedrückt, um die Verstellung der Lenksäule 33 in die Höhen- bzw. Neigungsverstellrichtung 9 festzustellen. Diese Feststellung kann durch Reibschluss erfolgen. Auch formschlüssig zusammenwirkende Elemente, beispielsweise Verzahnungen können vorgesehen sein.

Zur Verspannung der Feststellteile 19, 20 mit den Seitenwangen 10, 11 und des Feststellteils 19 mit dem Rückhalteteil 5 kann die Feststelleinrichtung 7 in herkömmlicher Weise ausgebildet sein. Beispielsweise ist ein zum Öffnen und Schließen der Feststelleinrichtung 7 dienender Spannhebel 23 mit einer Nockenscheibe 24 verbunden, die er bei einer Verdrehung um die Achse des Spannbolzens 16 mitnimmt und die mit einer Kulissenscheibe zusammenwirkt. Die Kulissenscheibe ist hier einteilig mit dem Feststellteil 19 ausgebildet, es könnte aber auch eine separate Kulissenscheibe vorhanden sein. Auch Anordnungen mit Wälzkörpern oder andere Ausbildungen von Spannmechanismen sind einsetzbar.

Der Abschnitt 22 des Feststellteils 19 durchsetzt eine Öffnung in der Seitenwange 10 (die Seitenwange 10 könnte auch oberhalb des Abschnitts 22 des Feststellteils 19 enden) und eine Öffnung im Seitenschenkel 12 der Zwischeneinheit 14. Im geschlossenen Zustand der Feststelleinrichtung ist der Abschnitt 22 mit einer an ihm angeordneten Verzahnung 25 an eine Verzahnung 26 des Rückhalteteils 5 angedrückt. Je nach der Längeneinstellung der Lenksäule kommen die Verzahnungen 25, 26 in unterschiedlichen Positionen in gegenseitige Anlage.

Der Abschnitt 22 des Feststellteils 19, der als Ganzes auf einer Seite des Spannbolzens 16 liegt, ist gegen eine Verschiebung gegenüber der Trageinheit 6 in Richtung parallel zur Längsachse 4 von den Rändern der durchsetzten Öffnung in der Seitenwange 10 und/oder von den Rändern der durchsetzten Öffnung im Seitenschenkel 12 der Zwischeneinheit 14 unverschiebbar gehalten.

Durch das Zusammenwirken der Verzahnung 25 des Abschnitts 22 mit der Verzahnung 26 des Rückhalteteils 5 wird das Rückhalteteil 5 im geschlossenen Zustand der Feststelleinrichtung 7 gegen eine Verschiebung gegenüber dem Feststellteil 19 in Richtung der Lenkspindellängsachse 4 festgestellt. Falls beim Schließen der Feststelleinrichtung 7 diese beiden Verzahnungen in einer Zahn-Auf-Zahn-Stellung in gegenseitige Anlage gelangen, so wird zumindest nach einer geringfügigen anfänglichen Verschiebung (die kleiner als der Zahnabstand der Verzahnung ist) eine weitere Verschiebung des Rückhalteteils 5 gegenüber dem Feststellteil 19 blockiert.

Auch andere formschlüssige Verbindungen zwischen dem Feststellteil 19 und dem Rückhalteteil 5 sind möglich, beispielsweise über in Löcher eingreifende Bolzen.

Im geöffneten Zustand der Feststelleinrichtung 7 ist das Feststellteil 19 vom Rückhalteteil 5 zurückgezogen und diese beiden Teile sind außer Eingriff gebracht, wobei die Lenkspindellagereinheit 2 zusammen mit dem Rückhalteteil 5 in die Längenverstellrichtung 8 verstellbar ist.

Die bisher beschriebenen Elemente der Lenksäule 33, abgesehen von der Art der Ausbildung der Verbindung zwischen der Lenkspindellagereinheit 2 und dem Rückhalteteil 5, welche im Folgenden genauer beschrieben wird, können in verschiedenen, aus dem vorbekannten Stand der Technik bekannten Arten und Weisen ausgebildet sein.

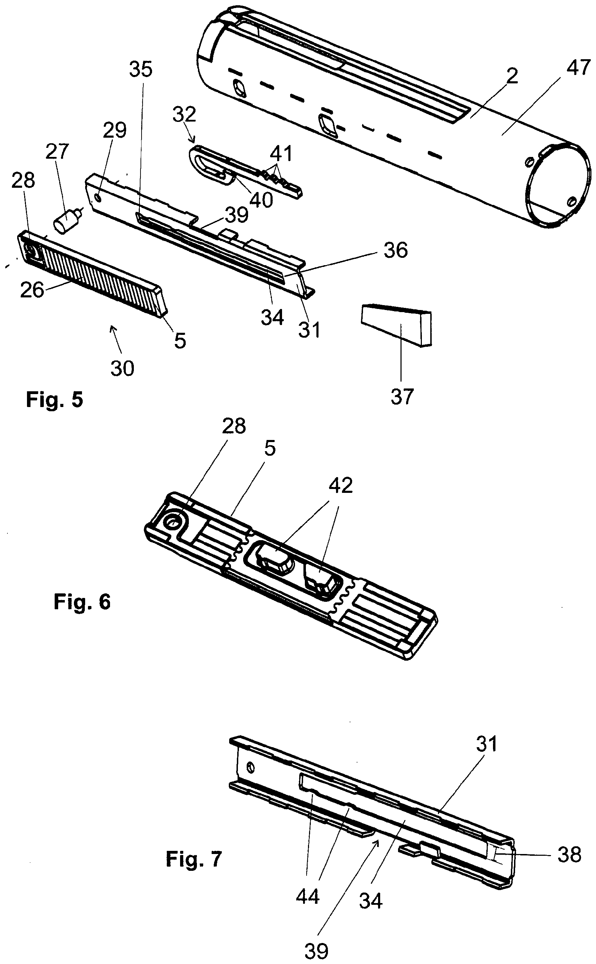

Das Rückhalteteil 5 ist gegenüber der Lenkspindellagereinheit 2 parallel zur Lenkspindellängsachse 4 verschiebbar geführt und mit der Lenkspindellagereinheit 2 zum einen über eine Losbrechverbindung und zum anderen über die Energieabsorptionsvorrichtung 30 verbunden. Die Losbrechverbindung kann beispielsweise über einen Scherbolzen 27 erfolgen. Im gezeigten Ausführungsbeispiel ist der Scherbolzen 27 einerseits in eine Öffnung 28 im Rückhalteteil 5, andererseits in eine Öffnung 29 eingesetzt (vgl. Fig. 5). Die Lenkspindellagereinheit 2 umfasst in diesem Ausführungsbeispiel ein Mantelrohr 47. Die starr mit diesem verbundene, beispielsweise durch Verschweißung, und in Richtung der Lenkspindellängsachse 4 sich erstreckende Schiene 31 mit U-förmigem Querschnitt ist Teil der Energieabsorptionsvorrichtung 30. Die Öffnung 29 ist hierbei in der Schiene 31 ausgebildet.

Die Biegelasche 32 als Teil der Energieabsorptionsvorrichtung 30 ist einerseits mit dem Rückhalteteil 5 und andererseits mit der Lenkspindellagereinheit 2 verbunden. Die Biegelasche 32 ist im gezeigten Ausführungsbeispiel U-förmig ausgebildet, wobei der eine U-Schenkel mit dem Rückhalteteil 5 und der andere U-Schenkel über die Schiene 31 mit der Lenkspindellagereinheit 2 verbunden ist. Vorzugsweise erstrecken sich die beiden U-Schenkel zumindest im Wesentlichen parallel zur Lenkspindellängsachse 4.

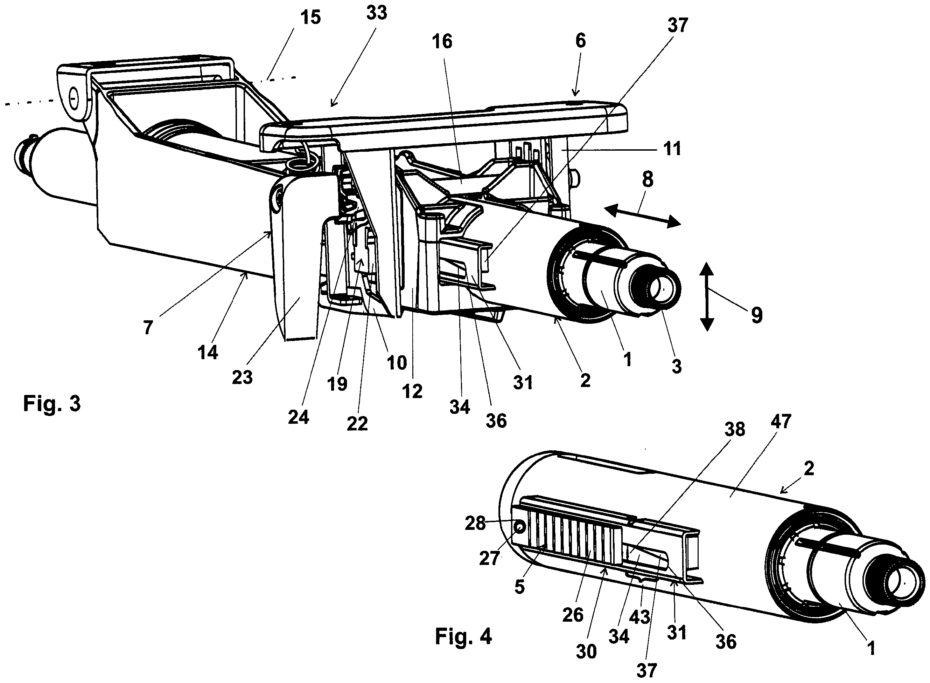

Der Aufbau der Energieabsorptionsvorrichtung 30 in diesem ersten Ausführungsbeispiel ist besonders gut in der Zusammenschau der Seitenansicht gemäß Fig. 4, der Explosionsdarstellung gemäß Fig. 5 sowie der Fig. 6 und 7 sichtbar. Fig. 6 zeigt die in Fig. 5 nicht dargestellte Rückseite des Rückhalteteils 5, Fig. 7 zeigt die Schiene 31 von innen. Wie bereits dargelegt, ist die Schiene 31 der hier gezeigten Energieabsorptionsvorrichtung 30 fix am Mantelrohr 47 der Lenkspindellagereinheit 2 angeordnet. In der Schiene 31 ist die Führungsbahn 34 in Form eines Langlochs ausgebildet. Der Anfang 35 und das Ende 36 des Langlochs bzw. der Führungsbahn 34 sind eingezeichnet. Die Biegelasche 32 weist als erstes Befestigungselement 40 in diesem Ausführungsbeispiel ein schwalbenschwanzähnliches Ende auf, welches zwischen den Elementen 42 auf der Rückseite des Rückhalteteils 5 gehalten ist. Die Verbindung zwischen den Elementen 42 und dem ersten Befestigungselement 40 der Biegelasche 32 ist derart ausgestaltet, dass die Elemente 42 bei einer Verschiebung des ersten Befestigungselementes 40 entlang der Führungsbahn 34 mit dem ersten Befestigungselement 40 mitbewegt werden. Daher wird bei den Elementen 42 auch von den mit dem ersten Befestigungselement 40 mitbewegten Elementen gesprochen. Bei geschlossener Feststelleinrichtung 7 ist das Rückhalteteil 5, wie bereits dargelegt, über den Eingriff der Verzahnungen 25 und 26 in den Richtungen der Lenkspindellängsachse 4 unverschiebbar an der Trageinheit 6 gehalten. Hierdurch ist das erste Befestigungselement 40 über das Rückhalteteil 5 bei geschlossener Feststelleinrichtung 7 an der Trageinheit 6 fixiert. Am anderen Ende der Biegelasche 32 befindet sich das zweite Befestigungselement 41, hier in Form von drei Vorsprüngen, welche in der Aussparung 39 der Schiene 31 festgehalten sind. Über die Schiene 31 ist dieses zweite Befestigungselement 41 somit an dem Mantelrohr 47 bzw. der Lenkspindellagereinheit 2 fixiert. Wird nun der Fahrzeuglenker im Crashfall auf das Lenkrad und damit auf die Lenkspindellagereinheit 2 geschleudert, so wird bei geschlossener Feststelleinrichtung 7 die Lenkspindellagereinheit 2 samt Lenkspindel 1 in Richtung parallel zur Lenkspindellängsachse 4 in Richtung hin zu den Vorderrädern des Fahrzeugs relativ zur Trageinheit 6 verschoben. Durch die bereits geschilderte Befestigung des ersten Befestigungselementes 40 an der Trageinheit 6 über das Rückhalteteil 5 kommt es dabei zu einer Verschiebung des ersten Befestigungselementes 40 sowie der mitbewegten Elemente 42 entlang der Führungsbahn 34 in Richtung hin zu deren Ende 36. Durch die dabei stattfindende Umformung der Biegelasche 32 kommt es zur gezielten Absorption bzw. zum gezielten Abbau der auf die Lenkspindellagereinheit 2 aufgebrachten Stoßenergie. Dies ist an sich bekannt, ebenso wie das Losbrechen des die beiden Öffnungen 28 und 29 miteinander verbindenden Scherbolzens 27 am Beginn der Verschiebung des Rückhalteteils 5 relativ zur Schiene 31. In diesem Zusammenhang wird darauf hingewiesen, dass der Scherbolzen 27 bei den nachfolgend noch geschilderten bevorzugten Ausgestaltungsformen vorhanden sein kann. Es sind aber auch erfindungsgemäße Energieabsorptionsvorrichtungen 30 möglich, bei denen auf den Scherbolzen 27 vollständig verzichtet wird.

Für den Fall, dass die durch Umformung der Biegelasche 32 realisierte Energieabsorption nicht ausreicht, z.B. weil ein besonders schwerer Fahrer auf das Lenkrad geschleudert wird, sieht die Energieabsorptionsvorrichtung 30 für einen zusätzlichen Energieabsorptionsmechanismus das Kollisionselement 37 vor, welches an der Führungsbahn 34 angeordnet ist. Im Crashfall wird mittels Zusammenwirken des ersten Befestigungselementes 40 bzw. des damit entlang der Führungsbahn 34 mitbewegten Elementes 42 mit dem Kollisionselement 37, welches bevorzugt seine Position entlang der Führungsbahn 34 beibehält, durch Umformung des Kollisionselementes 37 und/oder des ersten Befestigungselementes 40 und/oder des mitbewegten Elementes 42 zusätzlich Energie absorbiert. Um diese zusätzliche Energieabsorption nicht schlagartig, sondern sich langsam entlang der Führungsbahn 34 verstärkend auszuführen, sehen bevorzugte Ausgestaltungsformen wie die hier gezeigten Ausführungsbeispiele vor, dass das Kollisionselement 37 zur Veränderung der Stärke der Energieabsorption entlang der Teilstrecke 43 ausgebildet ist. In den hier gezeigten Ausführungsbeispielen ist das Kollisionselement 37 hierzu jeweils keilförmig ausgebildet oder weist zumindest einen keilförmigen Bereich auf. Bevorzugt ist, wie gesagt, auch, dass das Kollisionselement 37 sich entlang einer Teilstrecke 43 der Führungsbahn 34 erstreckt. Auch dies ist in den hier gezeigten Ausführungsbeispielen gut sichtbar.

Durch die Ausgestaltung der Form des Kollisionselementes 37 und durch die entsprechende Wahl seiner Position entlang der Führungsbahn 34 kann gezielt gesteuert werden, wann und in welcher Stärke dieser mittels des Kollisionselementes 37 realisierte zusätzliche Energieabsorptionsvorgang wirken soll. Das Gleiche gilt auch für die Länge der Teilstrecke 43 auf der das Kollisionselement 37, falls benötigt, für eine entsprechende zusätzliche Energieabsorption sorgt. Die Stärke der durch das Kollisionselement 37 erreichten, zusätzlichen Energieabsorption nimmt günstigerweise in Richtung hin zum Ende 36 der Führungsbahn 34 entlang der Teilstrecke 43 zu. Dies ist hier durch die entsprechende Ausgestaltungsform der keilförmigen Kollisionselemente 37 realisiert. Wie dies besonders gut in Fig. 4 zu sehen ist, reduziert das Kollisionselement 37 in bevorzugten Ausgestaltungsformen mit seinem keilförmigen Bereich die vom ersten Befestigungselement 40 und/oder dem mitbewegten Element 42 zu passierende Öffnungsweite 38 des die Führungsbahn 34 bildenden Langlochs. Grundsätzlich wird darauf hingewiesen, dass das Kollisionselement 37 an nahezu beliebiger Stelle zwischen dem Anfang 35 und dem Ende 36 der Führungsbahn 34 angeordnet sein kann. Wenn bei bevorzugten Ausgestaltungsformen aber erst einmal die Energieabsorption mittels Umformung der Biegelasche 32 wirken soll, sehen bevorzugte Ausgestaltungsformen, wie die hier realisierten, vor, dass die Teilstrecke 43 auf der das Kollisionselement 37 wirkt, im Bereich der dem Ende 36 zugewandten Hälfte der Führungsbahn 34 angeordnet ist. Das Kollisionselement 37 kann grundsätzlich vor dem Ende 36 der Führungsbahn 34 angeordnet sein. Es kann aber auch bis zum Ende 36 der Führungsbahn reichen.

In allen hier gezeigten Ausgestaltungsformen durchdringen die die mitbewegten Elemente 42 bildenden Zapfen am Rückhalteteil 5, welche das erste Befestigungselement 40 der Biegelasche 32 halten, das die Führungsbahn 34 bildende Langloch. In den gezeigten Ausführungsbeispielen sind es auch diese mitbewegten Elemente 42, welche zur Energieabsorption mit dem Kollisionselement 37 zusammenwirken. Natürlich kann aber abweichend von den hier gezeigten Ausführungsbeispielen das erste Befestigungselement 40 der Biegelasche 32 auch so ausgebildet sein, dass es direkt mit dem Kollisionselement 37 zusammenwirkt, wenn die Biegelasche 32 entsprechend weit umgeformt ist. Es ist auch klar, dass das Kollisionselement 37 nicht zwingend in der Öffnungsebene des Langlochs bzw. der Führungsbahn 34 angeordnet sein muss, um die Öffnungsweite 38 wirksam zu verkleinern bzw. zu verjüngen. Insbesondere wenn das erste Befestigungselement 40 und/oder die mitbewegten Elemente 42 aus dieser Öffnungsebene hervorstehen, muss das Kollisionselement 37 hierzu nicht in dieser Öffnungsebene angeordnet sein.

Im ersten Ausführungsbeispiel gemäß der Fig. 4 bis 7 ist das Kollisionselement 37 als separates Bauteil ausgeführt, welches an der gewünschten Stelle an der Schiene 31 und damit an der Führungsbahn 34 fixiert werden kann. Es kann sogar vorgesehen sein, dass verschieden lange und/oder verschieden ausgestaltete Kollisionselemente 37 auswechselbar entsprechend an der Führungsbahn 34 befestigt werden können. Mögliche Befestigungsformen sind Verklipsen, Verschrauben, Vernieten und dergleichen oder auch materialschlüssige Befestigungsarten wie Verschweißen, Verkleben und dergleichen, falls kein Auswechseln des Kollisionselementes 37 gewünscht wird.

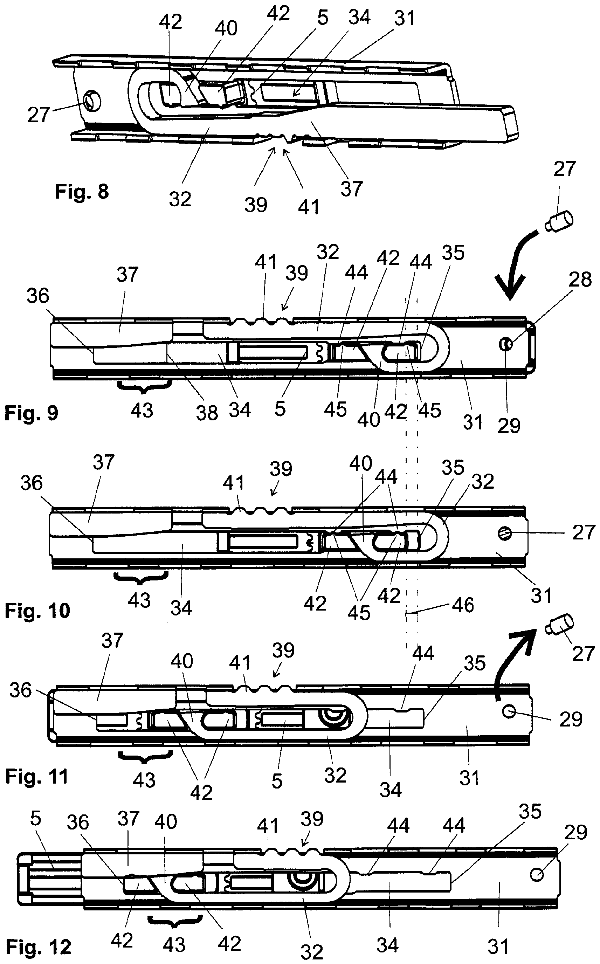

Abweichend vom bisher Besprochenen ersten Ausführungsbeispiel ist bei der alternativen Ausgestaltungsform einer erfindungsgemäßen Energieabsorptionsvorrichtung 30 gemäß Fig. 8 vorgesehen, dass das Kollisionselement 37 nicht als separates Bauteil, sondern als Teil der Biegelasche 32 selbst ausgeführt ist. Es handelt sich, wie gut in Fig. 8 zu sehen ist, bei dieser Ausführungsvariante beim Kollisionselement 37 um einen keilförmigen Fortsatz der Biegelasche 32. Ansonsten funktioniert dieses zweite Ausführungsbeispiel gemäß Fig. 8 wie auch das erste Ausführungsbeispiel, sodass hier keine weiteren Erläuterungen notwendig sind. Das zweite Ausführungsbeispiel gemäß Fig. 8 wie auch das dritte Ausführungsbeispiel gemäß der Fig. 9 bis 12 einer erfindungsgemäßen Energieabsorptionsvorrichtung 30 können anstelle des ersten Ausführungsbeispiels gemäß der Fig. 4 bis 7 entsprechend in der Lenksäule 33 gemäß der Fig. 1 bis 3 oder natürlich auch in anders ausgestalteten Lenksäulen 33 eingesetzt werden.

Bei dem dritten Ausführungsbeispiel einer erfindungsgemäßen Energieabsorptionsvorrichtung 30 gemäß der Fig. 9 bis 12 ist das Kollisionselement 37 als fixes Teil der Schiene 31 ausgeführt. Es handelt sich um eine umgebogene Lasche der Schiene 31, welche wiederum keilförmig ausgebildet ist und die Öffnungsweite 38 der auch hier als Langloch ausgebildeten Führungsbahn 34 in Richtung hin zum Ende 36 der Führungsbahn 34 über die Teilstrecke 43 hinweg nach und nach reduziert, ohne direkt in der Öffnungsebene des Langlochs angeordnet zu sein. Das Zusammenwirken dieses Kollisionselementes 37 hier mit einem der mitbewegten Elemente 42 ist gut in den Fig. 11 und 12 zu sehen. In Fig. 11 ist die Biegelasche 32 unter Verschiebung des ersten Befestigungselementes 40 und der mitbewegten Elemente 42 entlang der Führungsbahn 34 bereits so weit umgeformt, dass nun das eine der mitbewegten Elemente 42 auf das Kollisionselement 37 trifft. Bei weitergehender Verschiebung der Lenkspindellagereinheit 2 relativ zur Trageinheit 6 und damit der Schiene 31 relativ zum Rückhalteteil 5 wirkt nun das vordere mitbewegte Element 42 mit dem Kollisionselement 37 so zusammen, dass es unter Umformung des Kollisionselementes 37 und/oder des mitbewegten Elementes 42 zu einer zusätzlichen Absorption der auf die Lenkspindellagereinheit 2 im Crashfall eingebrachten Stoßenergie kommt. Hierdurch wird ein möglichst sanftes Abbremsen erreicht und verhindert, dass es am Ende 36 der Führungsbahn 34 zu einem harten Aufschlagen des mitbewegten Elementes 42 am Ende 36 der Führungsbahn 34 kommt.

Eingangs wurde bereits daraufhingewiesen, dass es günstig ist, wenn zur Vorgabe einer definierten Lösekraft am Beginn des Crashfalls und/oder auch nur schon zur Verbesserung der definierten Lagebeziehung der Bauelemente vor dem Crashfall zueinander das erste Befestigungselement 40 der Biegelasche 32 oder zumindest eines der mit ihm mitbewegten Elemente 42 in einer Anfangsstellung an der Führungsbahn 34 eingepasst, vorzugsweise klemmend gehalten, ist. Um dies zu erreichen, kann eine Art Kalibrierung bei der Montage durchgeführt werden, wie sie nun nachfolgend anhand der Fig. 9 und 10 beispielhaft erläutert wird. Auch wenn diese Erläuterung anhand des dritten Ausführungsbeispiels der Energieabsorptionsvorrichtung 30 erfolgt, sei dennoch darauf hingewiesen, dass diese Art der Kalibrierung auch bei den vorab geschilderten ersten beiden Ausführungsbeispielen der Energieabsorptionsvorrichtung 30 in gleicher Art und Weise realisiert ist, wie dies gut an den vorstehenden Bereichen 44 der das Langloch begrenzenden Wände in Fig. 7 zu sehen ist.

Auch bei den das Langloch 34 begrenzenden Wänden der Schiene 31 im dritten Ausführungsbeispiel sind entsprechende vorstehende Bereiche 44 vorgesehen. Fig. 9 zeigt die Stellung vor der Kalibrierung. Aus dieser Stellung kann im Zuge der Montage der Energieabsorptionsvorrichtung 30 vorgesehen sein, dass das erste Befestigungselement 40 mit seinen mitbewegten Elementen 42 auf dem Verschiebeweg 46 so weit entlang der Führungsbahn 34 verschoben wird, bis die mitbewegten Elemente 42 oder in anderen Ausführungsbeispielen auch direkt das erste Befestigungselement 40 zwischen den Wänden des Langlochs hier im Bereich der vorstehenden Bereiche 44 eingeklemmt werden. In den gezeigten Ausführungsbeispielen sind hierzu an den mitbewegten Elementen 42 die Nasen 45 vorgesehen. Dies kann aber auch anders ausgeführt sein. Jedenfalls wird durch diesen Kalibriervorgang ein Einpassen bzw. Festklemmen der mitbewegten Elemente 42 und damit auch des ersten Befestigungselements 40 in der Ausgangsstellung gemäß Fig. 10 erreicht, wodurch eine definierte bzw. vorgegebene Lösekraft, aber auch die genannte definierte Lagebeziehung zwischen den Bauelementen erreicht werden kann. Um diese Ausgangsstellung festzuhalten, kann, wie hier auch realisiert, vorgesehen sein, dass diese Stellung mittels des Scherbolzens 27 gesichert wird. Bei der Verschiebung entlang des Verschiebeweges 46 kommen in den hier gezeigten Ausführungsbeispielen die Öffnungen 28 und 29 im Rückhalteteil 5 und in der Schiene 31 in Deckung zueinander, sodass dann der Scherbolzen 27 durch diese beiden Öffnungen 28, 29 hindurchgesteckt werden kann, wie dies in Fig. 10 zu sehen ist. In anderen Ausführungsbeispielen kann auf diese Sicherung mittels Scherbolzen 27 aber auch verzichtet werden. Ist der Scherbolzen 27 vorhanden, so bricht er am Anfang des Crashvorgangs weg. Der Scherbolzen 27 kann auch dazu benutzt werden, die Biegelasche 32 wie in der WO 2011/072311 A1 in einer gewissen Vorspannung zu arretieren.

## Patentansprüche

1. Energieabsorptionsvorrichtung (30) für eine Lenksäule (33) für ein Kraftfahrzeug, wobei die Energieabsorptionsvorrichtung (30) zumindest eine Biegelasche (32) zur Energieabsorption im Crashfall aufweist und die Biegelasche (32) ein erstes Befestigungselement (40) zur Befestigung der Biegelasche (32) an einem ersten Bauteil der Lenksäule (33) und zumindest ein zweites Befestigungselement (41) zur Befestigung der Biegelasche (32) an einem zweiten Bauteil der Lenksäule (33) aufweist und das erste Befestigungselement (40) für den Crashfall unter Verformung der Biegelasche (32) entlang einer, von einem Anfang (35) und einem Ende (36) begrenzten Führungsbahn (34) relativ zum zweiten Befestigungselement (41) verschiebbar gelagert ist, **dadurch gekennzeichnet, dass** die Energieabsorptionsvorrichtung (30) zusätzlich zum Ende (36) der Führungsbahn (34) zumindest ein als separates Bauteil ausgebildetes Kollisionselement (37) aufweist, welches an der Führungsbahn (34) angeordnet ist, wobei im Crashfall
a) mittels Zusammenwirken des ersten Befestigungselements (40) mit dem Kollisionselement (37) durch Umformung des Kollisionselementes (37) und/oder des ersten Befestigungselementes (40) zusätzlich Energie absorbierbar ist;
oder
b) mittels Zusammenwirken eines damit entlang der Führungsbahn (34) mitbewegten Elementes (42) mit dem Kollisionselement (37) durch Umformung des Kollisionselementes (37) und/oder des mitbewegten Elementes (42) zusätzlich Energie absorbierbar ist;
oder
c) mittels Zusammenwirken des ersten Befestigungselements (40) und eines damit entlang der Führungsbahn mitbewegten Elementes (42) mit dem Kollisionselement (37) durch Umformung des Kollisionselementes (37) und/oder des ersten Befestigungselementes (40) und/oder des mitbewegten Elementes (42) zusätzlich Energie absorbierbar ist.

2. Energieabsorptionsvorrichtung (30) nach Anspruch 1, **dadurch gekennzeichnet, dass** das Kollisionselement (37) sich entlang zumindest einer Teilstrecke (43) der Führungsbahn (34) erstreckt und im Crashfall mittels des Zusammenwirkens des ersten Befestigungselements (40) und/oder des damit entlang der Führungsbahn (34) mitbewegten Elementes (42) mit dem Kollisionselement (37) durch Umformung des Kollisionselementes (37) und/oder des ersten Befestigungselementes (40) und/oder des mitbewegten Elementes (42) entlang der Teilstrecke (43) zusätzlich Energie absorbierbar ist.

3. Energieabsorptionsvorrichtung (30) nach Anspruch 2, **dadurch gekennzeichnet, dass** das Kollisionselement (37) und/oder das erste Befestigungselement (40) und/oder das mitbewegte Element (42) zur Veränderung der Stärke der Energieabsorption entlang der Teilstrecke (43) ausgebildet ist bzw. sind.

4. Energieabsorptionsvorrichtung (30) nach einem der Ansprüche 1 bis 3, **dadurch gekennzeichnet, dass** die Führungsbahn (34) ein Langloch aufweist oder ist.

5. Energieabsorptionsvorrichtung (30) nach Anspruch 4, **dadurch gekennzeichnet, dass** das erste Befestigungselement (40) und/oder das mitbewegte Element (42) das Langloch durchdringt bzw. durchdringen und im Crashfall entlang des Langlochs verschiebbar ist bzw. sind.

6. Energieabsorptionsvorrichtung (30) nach einem der Ansprüche 1 bis 5, **dadurch gekennzeichnet, dass** das Kollisionselement (37) zumindest einen keilförmigen Bereich aufweist oder als solcher ausgebildet ist.

7. Energieabsorptionsvorrichtung (30) nach Anspruch 6 und einem der Ansprüche 4 oder 5, **dadurch gekennzeichnet, dass** das Kollisionselement (37) mit seinem keilförmigen Bereich die vom ersten Befestigungselement (40) und/oder dem mitbewegten Element zu passierende Öffnungsweite (38) des Langlochs reduziert.

8. Energieabsorptionsvorrichtung (30) nach einem der Ansprüche 1 bis 6, **dadurch gekennzeichnet, dass** das Kollisionselement (37) zwischen dem Anfang (35) und dem Ende (36) der Führungsbahn (34) angeordnet ist.

9. Lenksäule (33) für ein Kraftfahrzeug mit einer, in einer Lenkspindellagereinheit (2) der Lenksäule (33) um ihre Lenkspindellängsachse (4) drehbar gelagerten Lenkspindel (1) und einer Trageinheit (6) zur Befestigung der Lenkspindellagereinheit (2) im Kraftfahrzeug, **dadurch gekennzeichnet, dass** die Lenksäule (33) zumindest eine Energieabsorptionsvorrichtung (30) nach einem der Ansprüche 1 bis 8 aufweist und die Biegelasche (32) mit einem der Befestigungselemente (40, 41) direkt oder indirekt an der Lenkspindellagereinheit (2) als dem einen der Bauteile und mit dem anderen der Befestigungselemente (40, 41) an der Trageinheit (6) als dem anderen der Bauteile befestigt ist.

10. Verfahren zur Energieabsorption in einer Lenksäule (33) für ein Kraftfahrzeug im Crashfall, **dadurch gekennzeichnet, dass** in einer Energieabsorptionsvorrichtung (30) nach einem der Ansprüche 1 bis 8, das erste Befestigungselement (40) unter Verformung der Biegelasche (32) entlang der Führungsbahn (34) relativ zum zweiten Befestigungselement (41) verschoben wird und mittels Zusammenwirken des ersten Befestigungselements (40) und/oder des damit entlang der Führungsbahn (34) mitbewegten Elementes (42) mit dem Kollisionselement (37) durch Umformung des Kollisionselementes (37) und/oder des ersten Befestigungselementes (40) und/oder des mitbewegten Elementes (42) zusätzlich Energie absorbiert wird.

## Claims

1. Energy absorption device (30) for a steering column (33) for a motor vehicle, wherein the energy absorption device (30) has at least one bending bracket (32) for energy absorption in a crash situation, and the bending bracket (32) has a first fastening element (40) for the fastening of the bending bracket (32) to a first component of the steering column (33) and at least one second fastening element (41) for the fastening of the bending bracket (32) to a second component of the steering column (33), and the first fastening element (40) is, for a crash situation, mounted so as to be displaceable relative to the second fastening element (41), with deformation of the bending bracket (32), along a guide track (34) which is delimited by a start (35) and an end (36), **characterized in that** the energy absorption device (30) has, in addition to the end (36) of the guide track (34), at least one collision element (37) which is designed as a separate component and is arranged on the guide track (34), wherein, in a crash situation,
a) by interaction of the first fastening element (40), with the collision element (37), energy can additionally be absorbed by deformation of the collision element (37) and/or of the first fastening element (40) ;
or
b) by interaction of an element (42) which is moved concomitantly with said first fastening element along the guide track (34) with the collision element (37), energy can additionally be absorbed by deformation of the collision element (37) and/or of the concomitantly moved element (42);
or
c) by interaction of the first fastening element (40), and of an element (42) which is moved concomitantly with said first fastening element along the guide track, with the collision element (37), energy can additionally be absorbed by deformation of the collision element (37) and/or the first fastening element (40) and/or of the concomitantly moved element (42) .

2. Energy absorption device (30) according to Claim 1, **characterized in that** the collision element (37) extends over at least a partial extent (43) of the guide track (34) and, in a crash situation, by the interaction of the first fastening element (40) and/or of the element (42), which is moved concomitantly with said first fastening element along the guide track (34), with the collision element (37), energy can additionally be absorbed by deformation of the collision element (37) and/or of the first fastening element (40) and/or of the concomitantly moved element (42) along the partial extent (43).

3. Energy absorption device (30) according to Claim 2, **characterized in that** the collision element (37) and/or the first fastening element (40) and/or the concomitantly moved element (42) is and/or are designed to vary the intensity of the energy absorption along the partial extent (43).

4. Energy absorption device (30) according to one of Claims 1 to 3, **characterized in that** the guide track (34) has or is a slot.

5. Energy absorption device (30) according to Claim 4, **characterized in that** the first fastening element (40) and/or the concomitantly moved element (42) extend (s) through the slot and are or is displaceable along the slot in a crash situation.

6. Energy absorption device (30) according to one of Claims 1 to 5, **characterized in that** the collision element (37) has, or is designed as, at least one wedge-shaped region.

7. Energy absorption device (30) according to Claim 6 and either of Claims 4 and 5, **characterized in that** the collision element (37), by way of its wedge-shaped region, reduces the opening width (38) of the slot to be passed through by the first fastening element (40) and/or the concomitantly moved element.

8. Energy absorption device (30) according to one of Claims 1 to 6, **characterized in that** the collision element (37) is arranged between the start (35) and the end (36) of the guide track (34).

9. Steering column (33) for a motor vehicle, having a steering spindle (1) which is mounted in a steering spindle bearing unit (2) of the steering column (33) so as to be rotatable about its steering spindle longitudinal axis (4), and having a support unit (6) for the fastening of the steering spindle bearing unit (2) in the motor vehicle, **characterized in that** the steering column (33) has at least one energy absorption device (30) according to one of Claims 1 to 8, and the bending bracket (32) is directly or indirectly fastened, by way of one of the fastening elements (40, 41), to the steering spindle bearing unit (2) as one of the components, and, by way of the other of the fastening elements (40, 41), to the support unit (6) as the other of the components.

10. Method for energy absorption in a steering column (33) for a motor vehicle in a crash situation, **characterized in that**, in an energy absorption device (30) according to one of Claims 1 to 8, the first fastening element (40) is, with deformation of the bending bracket (32), displaced along the guide track (34) relative to the second fastening element (41), and, by interaction of the first fastening element (40) and/or of the element (42), which is moved concomitantly with said first fastening element along the guide track (34), with the collision element (37), energy is additionally absorbed by deformation of the collision element (37) and/or of the first fastening element (40) and/or of the concomitantly moved element (42) .

## Revendications

1. Dispositif d'absorption d'énergie (30) pour une colonne de direction (33) pour un véhicule automobile, le dispositif d'absorption d'énergie (30) présentant au moins une patte flexible (32) pour l'absorption d'énergie en cas de collision et la patte flexible (32) présentant un premier élément de fixation (40) pour la fixation de la patte flexible (32) à un premier composant de la colonne de direction (33) et au moins un deuxième élément de fixation (41) pour la fixation de la patte flexible (32) à un deuxième composant de la colonne de direction (33) et le premier élément de fixation (40), en cas de collision, étant supporté de manière déplaçable avec déformation de la patte flexible (32) le long d'une trajectoire de guidage (34) limitée par un début (35) et une fin (36) par rapport au deuxième élément de fixation (41), **caractérisé en ce que** le dispositif d'absorption d'énergie (30) présente en plus de la fin (36) de la trajectoire de guidage (34), au moins un élément de collision (37) réalisé en tant que composant séparé, qui est disposé sur la trajectoire de guidage (34), et en cas de collision
a) par coopération du premier élément de fixation (40) avec l'élément de collision (37) par déformation de l'élément de collision (37) et/ou du premier élément de fixation (40), de l'énergie pouvant en outre être absorbée ; ou
b) par coopération d'un élément (42) entraîné avec lui le long de la trajectoire de guidage (34) avec l'élément de collision (37) par déformation de l'élément de collision (37) et/ou de l'élément entraîné (42), de l'énergie pouvant en outre être absorbée ; ou
c) par coopération du premier élément de fixation (40) et d'un élément (42) entraîné avec lui le long de la trajectoire de guidage avec l'élément de collision (37), par déformation de l'élément de collision (37) et/ou du premier élément de fixation (40) et/ou de l'élément entraîné (42), de l'énergie pouvant en outre être absorbée.

2. Dispositif d'absorption d'énergie (30) selon la revendication 1, **caractérisé en ce que** l'élément de collision (37) s'étend le long d'au moins une section partielle (43) de la trajectoire de guidage (34) et, en cas de collision, par coopération du premier élément de fixation (40) et/ou de l'élément (42) entraîné avec lui le long de la trajectoire de guidage (34) avec l'élément de collision (37), par déformation de l'élément de collision (37) et/ou du premier élément de fixation (40) et/ou de l'élément entraîné (42) le long de la section partielle (43), de l'énergie pouvant en outre être absorbée.

3. Dispositif d'absorption d'énergie (30) selon la revendication 2, **caractérisé en ce que** l'élément de collision (37) et/ou le premier élément de fixation (40) et/ou l'élément entraîné (42) est/sont réalisés de manière à modifier la puissance de l'absorption d'énergie le long de la section partielle (43).

4. Dispositif d'absorption d'énergie (30) selon l'une quelconque des revendications 1 à 3, **caractérisé en ce que** la trajectoire de guidage (34) présente ou est un trou oblong.

5. Dispositif d'absorption d'énergie (30) selon la revendication 4, **caractérisé en ce que** le premier élément de fixation (40) et/ou l'élément entraîné (42) traverse ou traversent le trou oblong et, en cas de collision, peut ou peuvent être déplacés le long du trou oblong.

6. Dispositif d'absorption d'énergie (30) selon l'une quelconque des revendications 1 à 5, **caractérisé en ce que** l'élément de collision (37) présente au moins une région en forme de coin ou est réalisé en forme de coin.

7. Dispositif d'absorption d'énergie (30) selon la revendication 6, et selon l'une quelconque des revendications 4 ou 5, **caractérisé en ce que** l'élément de collision (37) avec sa région en forme de coin, réduit la largeur d'ouverture (38) du trou oblong dans lequel doivent passer le premier élément de fixation (40) et/ou l'élément entraîné.

8. Dispositif d'absorption d'énergie (30) selon l'une quelconque des revendications 1 à 6, **caractérisé en ce que** l'élément de collision (37) est disposé entre le début (35) et la fin (36) de la trajectoire de guidage (34).

9. Colonne de direction (33) pour un véhicule automobile, comprenant un arbre de direction (1) supporté à rotation dans une unité de palier d'arbre de direction (2) de la colonne de direction (33) de manière à pouvoir tourner autour de son axe longitudinal d'arbre de direction (4) et une unité de support (6) pour la fixation de l'unité de palier d'arbre de direction (2) dans le véhicule automobile, **caractérisée en ce que** la colonne de direction (33) présente au moins un dispositif d'absorption d'énergie (30) selon l'une quelconque des revendications 1 à 8, et la patte flexible (32) est fixée par l'un des éléments de fixation (40, 41) directement ou indirectement à l'unité de palier d'arbre de direction (2) en tant que l'un des composants et par l'autre des éléments de fixation (40, 41) à l'unité de support (6) en tant que l'autre des composants.

10. Procédé pour absorber l'énergie dans une colonne de direction (33) pour un véhicule automobile en cas de collision, **caractérisé en ce que** dans un dispositif d'absorption d'énergie (30) selon l'une quelconque des revendications 1 à 8, le premier élément de fixation (40) est déplacé par déformation de la patte flexible (32) le long de la trajectoire de guidage (34) par rapport au deuxième élément de fixation (41) et, par coopération du premier élément de fixation (40) et/ou de l'élément (42) entraîné avec lui le long de la trajectoire de guidage (34), avec l'élément de collision (37), par déformation de l'élément de collision (37) et/ou du premier élément de fixation (40) et/ou de l'élément entraîné (42), de l'énergie étant en outre absorbée.
